(19) **Europäisches Patentamt**
**European Patent Office**
**Office européen des brevets**

(11) **EP 3 273 654 A1**

(12) **EUROPEAN PATENT APPLICATION**
published in accordance with Art. 153(4) EPC

(43) Date of publication:
**24.01.2018 Bulletin 2018/04**

(51) Int Cl.:
***H04L 25/02*** (2006.01)

(21) Application number: **15886023.9**

(86) International application number:
**PCT/CN2015/088036**

(22) Date of filing: **25.08.2015**

(87) International publication number:
**WO 2016/150094 (29.09.2016 Gazette 2016/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **20.03.2015 CN 201510127774**

(71) Applicant: **ZTE Corporation**
**Shenzhen, Guangdong 518057 (CN)**

(72) Inventors:
• **WU, Hao**
**Shenzhen**
**Guangdong 518057 (CN)**
• **LIU, Yuan**
**Shenzhen**
**Guangdong 518057 (CN)**
• **WANG, Kai**
**Shenzhen**
**Guangdong 518057 (CN)**

(74) Representative: **Studio Torta S.p.A.**
**Via Viotti, 9**
**10121 Torino (IT)**

(54) **METHOD, DEVICE, AND STORAGE MEDIUM FOR CHANNEL ESTIMATION**

(57)     Provided in embodiments of the present invention are a method, device, and storage medium for channel estimation. The method comprises: receiving a pilot channel; and, extending a first LS channel estimation result of a pilot position on the basis of the signal-to-noise ratio of the pilot signal to produce a second LS channel estimation result. By means of implementing the present invention, in which the first LS channel estimation result of the pilot position is extended on the basis of the signal-to-noise ratio of the pilot signal to produce the second LS channel estimation result, implemented is extension of an existing channel estimation algorithm, thus allowing different extensions to be executed with respect to the existing LS channel estimation algorithm on the basis of different signal-to-noise ratios, providing increased performance both when the signal-to-noise ratio is low and when the signal-to-noise ratio is high, and solving the problem of poor performance of existing channel estimation method either when the signal-to-noise ratio is low or when the signal-to-noise ratio is high.

RECEIVE A PILOT SIGNAL — S201

EXTEND A FIRST LS CHANNEL ESTIMATION RESULT OF A PILOT POSITION ON THE BASIS OF THE SIGNAL-TO-NOISE RATIO OF THE PILOT SIGNAL TO PRODUCE A SECOND LS CHANNEL ESTIMATION RESULT — S202

**Fig. 2**

EP 3 273 654 A1

**Description**

**TECHNICAL FIELD**

The present disclosure relates to the field of communication technologies, and more particularly, to a method and device for channel estimation used in the Orthogonal Frequency Division Multiplexing (OFDM) system, and a storage medium.

**BACKGROUND**

Long Term Evolution (LTE) is a long term evolution result of Universal Mobile Telecommunications System (UMTS) technology standard developed by The 3rd Generation Partnership Project (3GPP). As a high-speed transmission technology with the high spectral utilization efficiency and the good anti-multipath performance, Orthogonal Frequency Division Multiplexing (OFDM) has attracted wide attention. A mobile station (MS) may transmit a pilot signal to a base station (BS) so that the BS can know a channel response from the MS to the BS. The BS can perform operations such as beamforming, equalization and channel measurement using the channel response.

Common methods for channel estimation mainly include the Least Squares (LS) channel estimation algorithm, the time-frequency domain transformation channel estimation algorithm, and the like. The LS channel estimation algorithm is simple in implementation, but the estimation accuracy is low, and thus is susceptible to Gaussian noise, especially in the case of low signal-to-noise ratio (SNR). The time-frequency domain transformation channel estimation algorithm transforms a frequency domain channel response into a time domain for filtering, and then transforms the filtered time domain to the frequency domain. When the time-frequency domain transformation channel estimation algorithm transforms the frequency domain channel response into the time domain, the performance of channel estimation can be improved by means of frequency domain channel response zero padding. However, the performance of the method of zero padding is relatively serious in the case of high SNR.

Therefore, how to provide a method for channel estimation with high performance no matter whether the SNR is low or high is a technical problem to be urgently solved by those skilled in the art.

**SUMMARY**

Embodiments of the present disclosure provide a method and device for channel estimation and a storage medium to solve the problem of poor performance of an existing method for channel estimation in the case of low SNR or high SNR.

One of the embodiments of the present disclosure provides a method for channel estimation. The method includes: receiving a pilot signal; and extending a first LS channel estimation result of a pilot position according to the SNR of the pilot signal to produce a second LS channel estimation result.

In the above solution, extending a first LS channel estimation result according to the SNR of the pilot signal in the foregoing embodiment includes: calculating the SNR of the pilot signal, comparing the SNR with a preset value to determine a comparison result, determining an extension manner of the first LS channel estimation result according to the comparison result, and extending the first LS channel estimation result according to the determined extension manner.

In the above solution, determining an extension manner of the first LS channel estimation result according to the comparison result in the foregoing embodiment includes: extending the first LS channel estimation result using zero padding when the SNR is smaller than the preset value; or extending the first LS channel estimation result using linear connection when the SNR is greater than the preset value.

In the above solution, the first LS channel estimation result in the foregoing embodiment is:

$$H_{LS}(k,l) = Y(k,l)X^*(k,l).$$

When extending the first LS channel estimation result using zero padding, the obtained second LS channel estimation result is:

$$\hat{H}(k,l) = \begin{cases} H_{LS}(k,l), 0 \le k \le L-1 \\ 0, L \le k \le N_{FFT}-1 \end{cases}.$$

When extending the first LS channel estimation result using linear connection, the obtained second LS channel estimation result is:

$$\hat{H}(k,l) = \begin{cases} H_{LS}(k,l), 0 \le k \le L-1 \\ H_{LS}(L-1,l) + \dfrac{k-L+1}{N_{FFT}-L}(H_{LS}(0,l) - H_{LS}(L-1,l)), L \le k \le N_{FFT}-1 \end{cases}.$$

The $Y(k,l)$ is a received signal of the pilot position, $X(k,l)$ is a local pilot sequence, the $X^*(k,l)$ is a conjugate transpose of the $X(k,l)$, the $k$ is a carrier index, the $l$ is a symbol index, the $N_{FFT}$ is a number of points of FFT/IFFT, and the L is an LS pilot channel estimation sequence length.

In the above solution, after acquiring the second LS channel estimation result in the foregoing embodiment, the method further includes: de-noising the second LS channel estimation result.

One of the embodiments of the present disclosure further provides a device for channel estimation, which includes: a receiving module, configured to receive a pilot signal; and a processing module, configured to extend a first LS channel estimation result of a pilot position according to the SNR of the pilot signal to produce a second LS channel estimation result.

In the above solution, the processing module in the foregoing embodiment is further configured to calculate the SNR of the pilot signal, compare the SNR with a preset value to determine a comparison result, determine an extension manner of the first LS channel estimation result according to the comparison result, and extend the first LS channel estimation result according to the determined extension manner.

In the above solution, the processing module in the foregoing embodiment is further configured to extend the first LS channel estimation result using zero padding when the SNR is smaller than the preset value, or extend the first LS channel estimation result using linear connection when the SNR is greater than the preset value.

In the above solution, the first LS channel estimation result in the foregoing embodiment is:

$$H_{LS}(k,l) = Y(k,l)X^*(k,l).$$

When the processing module extends the first LS channel estimation result using zero padding, the obtained second LS channel estimation result is:

$$\hat{H}(k,l) = \begin{cases} H_{LS}(k,l), 0 \le k \le L-1 \\ 0, L \le k \le N_{FFT}-1 \end{cases}.$$

When the processing module extends the first LS channel estimation result using linear connection, the obtained second LS channel estimation result is:

$$\hat{H}(k,l) = \begin{cases} H_{LS}(k,l), 0 \le k \le L-1 \\ H_{LS}(L-1,l) + \dfrac{k-L+1}{N_{FFT}-L}(H_{LS}(0,l) - H_{LS}(L-1,l)), L \le k \le N_{FFT}-1 \end{cases}.$$

The $Y(k,l)$ is a received signal of the pilot position, $X(k,l)$ is a local pilot sequence, the $X^*(k,l)$ is a conjugate transpose of the $X(k,l)$, the $k$ is a carrier index, the $l$ is a symbol index, the $N_{FFT}$ is a number of points of FFT/IFFT, and the L is an LS pilot channel estimation sequence length.

In the above solution, the device for channel estimation in the foregoing embodiment further includes a de-noising module, configured to de-noise the second LS channel estimation result. The present disclosure has following beneficial effects.

According to the method and device for channel estimation and the storage medium provided in the embodiments of the present disclosure, the first LS channel estimation result of the pilot position is extended according to the SNR of the pilot signal to produce the second LS channel estimation result. In this way, extension of an existing channel estimation algorithm is implemented, which allows different extensions of the existing LS channel estimation algorithm to be executed according to different SNRs, and provides higher performance no matter whether the SNR is low or high, thereby solving the problem of poor performance of the existing method for channel estimation in case of low SNR or high SNR.

**BRIEF DESCRIPTION OF THE DRAWINGS**

FIG. 1 is a schematic diagram of a device for channel estimation according to a first embodiment of the present disclosure;
FIG. 2 is a flowchart of a method for channel estimation according to a second embodiment of the present disclosure; and
FIG. 3 is a flowchart of a method for channel estimation according to a third embodiment of the present disclosure.

**DETAILED DESCRIPTION**

The embodiments of the present disclosure are further described by means of specific embodiments with reference to the accompanying drawings.

The First Embodiment

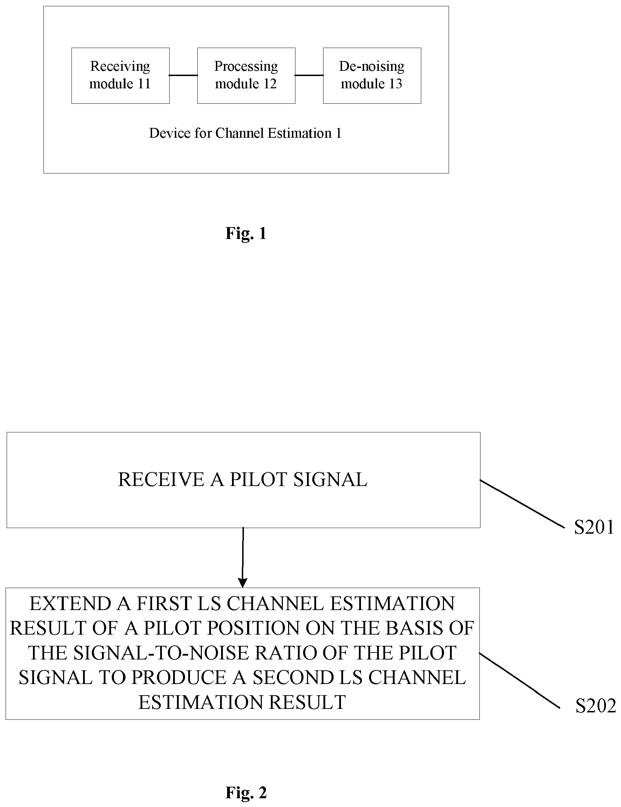

FIG. 1 is a schematic diagram of a device for channel estimation according to the first embodiment of the present disclosure. As can be known from FIG. 1, in this embodiment, the device 1 for channel estimation according to this embodiment of the present disclosure includes: a receiving module 11, configured to receive a pilot signal; and a processing module 12, configured to extend a first LS channel estimation result of a pilot position according to the SNR of the pilot signal to produce a second LS channel estimation result.

In some embodiments, the processing module 12 in the above embodiment is further configured to calculate the SNR of the pilot signal, compare the SNR with a preset value to determine a comparison result, determine an extension manner of the first LS channel estimation result according to the comparison result, and extend the first LS channel estimation result according to the determined extension manner.

In some embodiments, the processing module 12 in the above embodiment is further configured to extend the first LS channel estimation result using zero padding when the SNR is smaller than the preset value, or extend the first LS channel estimation result using linear connection when the SNR is greater than the preset value.

In some embodiments, the first LS channel estimation result in the above embodiment is:

$$H_{LS}(k,l) = Y(k,l)X^*(k,l).$$

When the processing module 12 extends the first LS channel estimation result using zero padding, the obtained second LS channel estimation result is:

$$\hat{H}(k,l) = \begin{cases} H_{LS}(k,l), 0 \leq k \leq L-1 \\ 0, L \leq k \leq N_{FFT}-1 \end{cases}.$$

When the processing module 12 extends the first LS channel estimation result using linear connection, the obtained second LS channel estimation result is:

$$\hat{H}(k,l) = \begin{cases} H_{LS}(k,l), 0 \leq k \leq L-1 \\ H_{LS}(L-1,l) + \dfrac{k-L+1}{N_{FFT}-L}(H_{LS}(0,l) - H_{LS}(L-1,l)), L \leq k \leq N_{FFT}-1 \end{cases}.$$

The $Y(k,l)$ is a received signal of the pilot position, $X(k,l)$ is a local pilot sequence, the $X^*(k,l)$ is a conjugate transpose of the $X(k,l)$, the $k$ is a carrier index, the $l$ is a symbol index, the $N_{FFT}$ is a number of points of FFT/IFFT, and the L is an LS pilot channel estimation sequence length.

In some embodiments, as shown in FIG. 1, the device for channel estimation in the above embodiment further includes a de-noising module 13, configured to de-noise the second LS channel estimation result.

In some embodiments, the de-noising module 13 in the above embodiment is further configured to de-noise the second LS channel estimation result using a time-frequency domain transformation algorithm.

In some embodiments, the de-noising module 13 in the above embodiment is further configured to transform the second LS channel estimation result $\hat{H}(k,l)$ into a time domain by means of Inverse Fast Fourier Transformation (IFFT) to obtain a time-domain channel response $h_{NOISE}(n,l)$, wherein $0 \le n \le N_{FFT}$ -1.

A time-domain noise power is calculated according to the following formula:

$$\sigma^2 = \frac{1}{N_{FFT} - N_{back} - N_{front}} \sum_{n=N_{front}}^{N_{FFT} - N_{back} - 1} \left| h_{NOISE}(n,l) \right|^2 .$$

Data of $h_{NOISE}(n,l)$ within the range $N_{front} \le n \le N_{FFT} - N_{back}$ -1 is reset to zero. When the data of the $h_{NOISE}(n, l)$ within the ranges $0 \le n \le N_{front}$ -1 and $N_{FFT} - N_{back} \le n \le N_{FFT}$ -1 is smaller than $m\sigma^2$, the corresponding data is reset to zero, and $h(n,l)$ is generated.

A frequency domain channel response $H(k,l)$ is obtained by transforming the time-domain channel response $h(n,l)$ subjected to time-domain filtering into a frequency domain by means of FFT transformation, wherein the $N_{Front}$ represents a front window length, the $N_{back}$ represents a back window length, the $N_{FFT}$ is the number of points of FFT/IFFT, and the $m$ is determined according to signal modulation.

In practical application, the receiving module 11, the processing module 12 and the de-noising module 13 may be implemented by a central processing unit (CPU), or a digital signal processor (DSP), or a field programmable gate array (FPGA), etc. The CPU, the DSP and the FPGA may be built in the device 1 for channel estimation.

The Second Embodiment

FIG. 2 is a schematic diagram of a method for channel estimation according to the second embodiment of the present disclosure. As can be known from FIG. 2, in this embodiment, the method for channel estimation according to this embodiment of the present disclosure includes following steps:

S201: receiving a pilot signal; and
S202: extending a first LS channel estimation result of a pilot position according to the SNR of the pilot signal to produce a second LS channel estimation result.

In some embodiments, extending a first LS channel estimation result according to the SNR of the pilot signal in the above embodiment includes: calculating the SNR of the pilot signal, comparing the SNR with a preset value to determine a comparison result, determining an extension manner of the first LS channel estimation result according to the comparison result, and extending the first LS channel estimation result according to the determined extension manner.

In some embodiments, determining an extension manner of the first LS channel estimation result according to the comparison result in the above embodiment includes: extending the first LS channel estimation result using zero padding when the SNR is smaller than the preset value; or extending the first LS channel estimation result using linear connection when the SNR is greater than the preset value.

In some embodiments, the first LS channel estimation result in the above embodiment is:

$$H_{LS}(k,l) = Y(k,l)X^*(k,l) .$$

When extending the first LS channel estimation result using zero padding, the obtained second LS channel estimation result is:

$$\hat{H}(k,l) = \begin{cases} H_{LS}(k,l), 0 \le k \le L-1 \\ 0, L \le k \le N_{FFT} - 1 \end{cases} .$$

When extending the first LS channel estimation result using linear connection, the obtained second LS channel estimation result is:

$$\hat{H}(k,l) = \begin{cases} H_{LS}(k,l), 0 \le k \le L-1 \\ H_{LS}(L-1,l) + \dfrac{k-L+1}{N_{FFT}-L}(H_{LS}(0,l) - H_{LS}(L-1,l)), L \le k \le N_{FFT}-1 \end{cases}.$$

The $Y(k,l)$ is a received signal of the pilot position, $X(k,l)$ is a local pilot sequence, the $X^*(k,l)$ is a conjugate transpose of the $X(k,l)$, the $k$ is a carrier index, the $l$ is a symbol index, the $N_{FFT}$ is a number of points of FFT/IFFT, and the L is an LS pilot channel estimation sequence length.

In some embodiments, after acquiring the second LS channel estimation result in the above embodiment, the method further includes: de-noising the second LS channel estimation result. In some embodiments, de-noising the second LS channel estimation result in the above embodiment further includes: de-noising the second LS channel estimation result using a time-frequency domain transformation algorithm.

In some embodiments, de-noising the second LS channel estimation result using a time-frequency domain transformation algorithm in the above embodiment includes: transforming the second LS channel estimation result $\hat{H}(k, l)$ into a time domain by means of Inverse Fast Fourier Transformation (IFFT) to obtain a time-domain channel response $h_{NOISE}(n,l)$, $0 \le n \le N_{FFT}-1$.

A time-domain noise power is calculated according to

$$\sigma^2 = \frac{1}{N_{FFT} - N_{back} - N_{front}} \sum_{n=N_{front}}^{N_{FFT}-N_{back}-1} \left| h_{NOISE}(n,l) \right|^2.$$

Data of the $h_{NOISE}(n,l)$ within the range $N_{front} \le n \le N_{FFT}$ - $N_{back}$ -1 is reset to zero. When the data of the $h_{NOISE}(n,l)$ within the ranges $0 \le n \le N_{front}$ -1 and $N_{FFT}$ - $N_{back} \le n \le N_{FFT}$ -1 is smaller than $m\sigma^2$, the corresponding data is reset to zero, and $h(n,l)$ is generated. The frequency domain channel response $H(k,l)$ is obtained by transforming the time-domain channel response $h(n,l)$ subjected to time-domain filtering into the frequency domain by means of FFT transformation, wherein the $N_{Front}$ represents a front window length, the $N_{back}$ represents a back window length, the $N_{FFT}$ is the number of points of FFT/IFFT, and the $m$ is determined according to signal modulation.

An embodiment of the present disclosure further provides a computer readable storage medium, which includes a set of instructions configured to execute the method for channel estimation as shown in FIG. 2.

The Third Embodiment

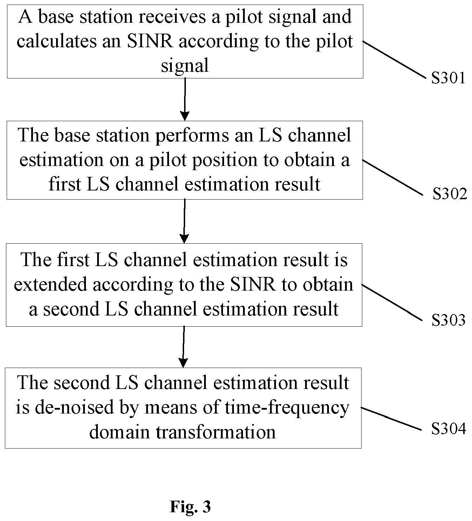

FIG. 3 is a schematic diagram of a method for channel estimation according to the third embodiment of the present disclosure. As can be known from FIG. 3, in this embodiment, the method for channel estimation according to this embodiment of the present disclosure includes following steps.

S301: a base station receives a pilot signal and calculates a Signal-to -Interference plus Noise Ratio (SINR) according to the pilot signal.

The base station may calculate the SINR using filtered pilot signal energy and noise energy. S302: the base station performs an LS channel estimation on a pilot position to obtain a first LS channel estimation result.

The base station performs an LS channel estimation on the pilot position. Supposing that $Y(k,l)$ is a received signal of the pilot position, $X(k,l)$ is a known local pilot sequence, $X^*(k,l)$ is a conjugate transpose of the $X(k,l)$, $k$ is a carrier index, and $l$ is a symbol index, the first LS channel estimation result of the pilot position is as below:

$$H_{LS}(k,l) = Y(k,l)X^*(k,l).$$

S303: the first LS channel estimation result is extended according to the SINR to obtain a second LS channel estimation result.

Specifically, when the estimated SINR is smaller than a preset value SINR$_{Threshold}$, the first LS channel estimation result is extended by using zero padding, and the second LS channel estimation result obtained by extension is as below:

$$\hat{H}(k,l) = \begin{cases} H_{LS}(k,l), 0 \le k \le L-1 \\ 0, L \le k \le N_{FFT}-1 \end{cases}.$$

When the estimated SINR is greater than the preset value $SINR_{Threshold}$, the first LS channel estimation result is extended by using linear connection, and the second LS channel estimation result obtained by extension is as below:

$$\hat{H}(k,l) = \begin{cases} H_{LS}(k,l), 0 \le k \le L-1 \\ H_{LS}(L-1,l) + \dfrac{k-L+1}{N_{FFT}-L}(H_{LS}(0,l) - H_{LS}(L-1,l)), L \le k \le N_{FFT}-1 \end{cases};$$

wherein the $Y(k,l)$ is a received signal of the pilot position, $X(k,l)$ is a local pilot sequence, the $X^*(k,l)$ is a conjugate transpose of the $X(k,l)$, the $k$ is a carrier index, the $l$ is a symbol index, the $N_{FFT}$ is a number of points of FFT/IFFT, and the L is an LS pilot channel estimation sequence length.

In practical application, the preset value $SINR_{Threshold}$ may be determined according to actual demands, which is flexible in setup.

S304: the second LS channel estimation result is de-noised by means of time-frequency domain transformation.

Specifically, the base station transforms the extended frequency domain channel response $\hat{H}(k,l)$ into the time domain by means of IFFT transformation to obtain the time-domain channel response $h_{NOISE}(n,l)$, $0 \le n \le N_{FFT}-1$, which is de-noised in the time domain.

A time-domain noise power is calculated according to the following formula:

$$\sigma^2 = \frac{1}{N_{FFT} - N_{back} - N_{front}} \sum_{n=N_{front}}^{N_{FFT}-N_{back}-1} \left| h_{NOISE}(n,l) \right|^2 .$$

The $N_{Front} = L_{CP}\beta_{front}$ represents a front window length, and the $N_{back} = L_{CP}\beta_{back}$ represents a back window length. Supposing $L_{CP} = \left\lceil (N_{FFT}) \times \dfrac{l_{CP}}{2048} \right\rceil,$ the $l_{CP}$ is related to a mode of the CP, which is 144 in case of a normal CP and 512 in case of an extended CP. $\beta_{back}$ and $\beta_{front}$ are determined according to the following Table 1.

Table 1

| Modulation mode | $\beta_{back}$ | $\beta_{front}$ |
|---|---|---|
| QPSK | 1.5 | 0.5 |
| 16QAM | 1.5 | 0.75 |
| 64QAM | 2 | 1 |

The de-noising specifically includes following steps.

Data of $h_{NOISE}(n,l)$ within the range $N_{front} \le n \le N_{FFT} - N_{back} -1$ is reset to zero. When the data of the $h_{NOISE}(n,l)$ within the ranges $0 \le n \le N_{front} -1$ and $N_{FFT} - N_{back} \le n \le N_{FFT} -1$ is smaller than $m\sigma^2$, the corresponding data is reset to zero. The $h_{NOISE}(n,l)$ subjected to the above treatment is let be $h(n,l)$. The $m$ may be selected according to modulation modes from the following Table 2.

Table 2

| Modulation mode | The number of carriers is greater than 72 | The number of carriers is smaller than 72 |
|---|---|---|
| QPSK | 5 | 0 |
| 16QAM | 5 | 0 |
| 64QAM | 0 | 0 |

After de-noising, the frequency domain channel response $H(k,l)$ is obtained by transforming the time-domain channel response $h(n,l)$ subjected to time-domain filtering into the frequency domain by means of FFT transformation.

In summary, by implementing the present disclosure, at least following beneficial effects exist.

The first LS channel estimation result of the pilot position is extended according to the SNR of the pilot signal to produce the second LS channel estimation result. In this way, extension of an existing channel estimation algorithm is implemented, which allows different extensions of the existing LS channel estimation algorithm to be executed according to different SNRs, and provides higher performance no matter whether the SNR is low or high, thereby solving the problem of poor performance of the existing method for channel estimation in the case of low SNR or high SNR.

Those skilled in the art should realize that the embodiments of the present disclosure may be provided as a method, a system or a computer program product. Therefore, the present disclosure may use forms of a hardware embodiment, a software embodiment, or an embodiment in combination of software and hardware aspects. Furthermore, the present disclosure may use forms of computer program products implemented on one or more computer storage media (including but not limited to a magnetic disk memory, an optical memory or the like) which includes a computer program code.

The present disclosure is described with reference to flowcharts and/or block diagrams according to the method, equipment (system) and a computer program product of the embodiments of the present disclosure. It is to be understood that each flow and/or block in the flowchart and/or block diagram as well as combination of flow and/or block in the flowchart and/or block diagram may be realized by computer program instructions. These computer program instructions may be provided to a general purpose computer, a special purpose computer, an embedded processor or processors of other programmable data processing equipment so as to generate a machine so that such a device configured to achieve functions designated in one or more flows of the flowchart and/or in one or more blocks of the block diagram is generated by means of instructions executed by computers or processors of other programmable data processing equipment.

These computer program instructions may be stored in a computer-readable memory which can lead a computer or other programmable data processing equipment to work in a particular way so that instructions stored in the computer-readable memory may generate a manufactured product comprising a command device which can achieve functions designated in one or more flows of the flowchart and/or in one or more blocks of the block diagram.

These computer program instructions may also be loaded onto computers or other programmable data processing equipment so that a series of operation steps are executed on the computers or other programmable equipment to generate a processing achieved by computers, thus providing steps for achieving functions designated in one or more flows of the flowchart and/or in one or more blocks of the block diagram by means of instructions executed by computers or other programmable equipment.

The above are merely implementations of the embodiments of the present disclosure. It should be pointed out that, for an ordinary person skilled in the art, the present disclosure may have various improvements and embellishments without departing from the principles of the embodiments of the present disclosure. These improvements and embellishments should also be regarded as falling into the scope of protection of the present disclosure.

## Industrial Applicability

According to the embodiments of the present disclosure, the first LS channel estimation result of the pilot position is extended according to the SNR of the pilot signal to produce the second LS channel estimation result. In this way, extension of an existing channel estimation algorithm is implemented, which allows different extensions of the existing LS channel estimation algorithm to be executed according to different SNRs, and provides higher performance no matter whether the SNR is low or high, thereby solving the problem of poor performance of the existing method for channel estimation in case of low SNR or high SNR.

## Claims

1.   A method for channel estimation, comprising:

   receiving a pilot signal; and
   extending a first LS channel estimation result of a pilot position according to a signal-to-noise ratio SNR of the pilot signal to produce a second LS channel estimation result.

2.   The method for channel estimation according to claim 1, wherein the extending a first LS channel estimation result according to an SNR of the pilot signal comprises:

   calculating the SNR of the pilot signal;
   comparing the SNR with a preset value to determine a comparison result,
   determining an extension manner of the first LS channel estimation result according to the comparison result; and

extending the first LS channel estimation result according to the determined extension manner.

3.  The method for channel estimation according to claim 2, wherein the determining an extension manner of the first LS channel estimation result according to the comparison result comprises:

   extending the first LS channel estimation result using zero padding when the SNR is smaller than the preset value; or
   extending the first LS channel estimation result using linear connection when the SNR is greater than the preset value.

4.  The method for channel estimation according to claim 3, wherein
   the first LS channel estimation result is:

$$H_{LS}(k,l) = Y(k,l)X^{*}(k,l);$$

when extending the first LS channel estimation result using zero padding, the obtained second LS channel estimation result is:

$$\hat{H}(k,l) = \begin{cases} H_{LS}(k,l), 0 \le k \le L-1 \\ 0, L \le k \le N_{FFT}-1 \end{cases};$$

when extending the first LS channel estimation result using linear connection, the obtained second LS channel estimation result is:

$$\hat{H}(k,l) = \begin{cases} H_{LS}(k,l), 0 \le k \le L-1 \\ H_{LS}(L-1,l) + \dfrac{k-L+1}{N_{FFT}-L}(H_{LS}(0,l) - H_{LS}(L-1,l)), L \le k \le N_{FFT}-1 \end{cases};$$

wherein the $Y(k,l)$ is a received signal of the pilot position, $X(k,l)$ is a local pilot sequence, the $X^{*}(k,l)$ is a conjugate transpose of the $X(k,l)$, the $k$ is a carrier index, the $l$ is a symbol index, the $N_{FFT}$ is a number of points of FFT/IFFT, and the L is an LS pilot channel estimation sequence length.

5.  The method for channel estimation according to any one of claims 1~4, wherein after acquiring the second LS channel estimation result, the method further comprises: de-noising the second LS channel estimation result.

6.  A device for channel estimation, comprising:

   a receiving module, configured to receive a pilot signal; and
   a processing module, configured to extend a first LS channel estimation result of a pilot position according to an SNR of the pilot signal to produce a second LS channel estimation result.

7.  The device for channel estimation according to claim 6, wherein the processing module is further configured to calculate the SNR of the pilot signal, compare the SNR with a preset value to determine a comparison result, determine an extension manner of the first LS channel estimation result according to the comparison result, and extend the first LS channel estimation result according to the determined extension manner.

8.  The device for channel estimation according to claim 7, wherein the processing module is further configured to extend the first LS channel estimation result using zero padding when the SNR is smaller than the preset value, or extend the first LS channel estimation result using linear connection when the SNR is greater than the preset value.

9.  The device for channel estimation according to claim 8, wherein
   the first LS channel estimation result is:

$$H_{LS}(k,l) = Y(k,l)X^*(k,l)$$ ;

when the processing module extends the first LS channel estimation result using zero padding, the obtained second LS channel estimation result is:

$$\hat{H}(k,l) = \begin{cases} H_{LS}(k,l), 0 \le k \le L-1 \\ 0, L \le k \le N_{FFT}-1 \end{cases}$$ ;

when the processing module extends the first LS channel estimation result using linear connection, the obtained second LS channel estimation result is:

$$\hat{H}(k,l) = \begin{cases} H_{LS}(k,l), 0 \le k \le L-1 \\ H_{LS}(L-1,l) + \dfrac{k-L+1}{N_{FFT}-L}(H_{LS}(0,l)-H_{LS}(L-1,l)), L \le k \le N_{FFT}-1 \end{cases}$$ ;

wherein the $Y(k,l)$ is a received signal of the pilot position, $X(k,l)$ is a local pilot sequence, the $X^*(k,l)$ is a conjugate transpose of the $X(k,l)$, the $k$ is a carrier index, the $l$ is a symbol index, the $N_{FFT}$ is a number of points of FFT/IFFT, and the L is an LS pilot channel estimation sequence length.

10. The device for channel estimation according to any one of claims 6~9, wherein the device for channel estimation further comprises a de-noising module, configured to de-noise the second LS channel estimation result.

11. A computer readable storage medium, comprising a set of instructions, wherein the instructions are configured to execute the method for channel estimation according to any one of claims 1-5.

| Receiving module 11 | Processing module 12 | De-noising module 13 |

Device for Channel Estimation 1

**Fig. 1**

RECEIVE A PILOT SIGNAL

S201

EXTEND A FIRST LS CHANNEL ESTIMATION RESULT OF A PILOT POSITION ON THE BASIS OF THE SIGNAL-TO-NOISE RATIO OF THE PILOT SIGNAL TO PRODUCE A SECOND LS CHANNEL ESTIMATION RESULT

S202

**Fig. 2**

A base station receives a pilot signal and calculates an SINR according to the pilot signal ⟍ S301

The base station performs an LS channel estimation on a pilot position to obtain a first LS channel estimation result ⟍ S302

The first LS channel estimation result is extended according to the SINR to obtain a second LS channel estimation result ⟍ S303

The second LS channel estimation result is de-noised by means of time-frequency domain transformation ⟍ S304

**Fig. 3**

# INTERNATIONAL SEARCH REPORT

| | International application No. |
|---|---|
| | PCT/CN2015/088036 |

**A. CLASSIFICATION OF SUBJECT MATTER**

H04L 25/02 (2006.01) i

According to International Patent Classification (IPC) or to both national classification and IPC

**B. FIELDS SEARCHED**

Minimum documentation searched (classification system followed by classification symbols)

H04L; H04W

Documentation searched other than minimum documentation to the extent that such documents are included in the fields searched

Electronic data base consulted during the international search (name of data base and, where practicable, search terms used)

CNABS, CNTXT, CNKI, SIPOABS, VEN, WOTXT, USTXT: pilot?, SNR, SINR, LS, Least square?, threshold, limit, predefine+, H04L 25/0202/CPC, H04L 25/022/CPC, H04L 25/024/CPC

**C. DOCUMENTS CONSIDERED TO BE RELEVANT**

| Category* | Citation of document, with indication, where appropriate, of the relevant passages | Relevant to claim No. |
|---|---|---|
| X | CN 102687441 A (NEC CORP.) 19 September 2012 (19.09.2012) claim 1, description, paragraphs [0100], and [0133] to [0135] | 1, 2, 5-7, 10, 11 |
| A | CN 102687441 A (NEC CORP.) 19 September 2012 (19.09.2012) claim 1, description, paragraphs [0100], and [0133] to [0135] | 3, 4, 8, 9 |
| A | CN 102308542 A (QUALCOMM INC.) 04 January 2012 (04.01.2012) the whole document | 1-11 |
| A | US 2007206689 A1 (INTERDIGITAL TECH CORP.) 06 September 2007 (06.09.2007) the whole document | 1-11 |

☐ Further documents are listed in the continuation of Box C.　　☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 05 December 2015 | 23 December 2015 |

| Name and mailing address of the ISA/CN<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>REN, Ling<br><br>Telephone No. (86-10) 62088423 |

Form PCT/ISA/210 (second sheet) (July 2009)

## INTERNATIONAL SEARCH REPORT
### Information on patent family members

International application No.

PCT/CN2015/088036

| Patent Documents referred in the Report | Publication Date | Patent Family | Publication Date |
|---|---|---|---|
| CN 102687441 A | 19 September 2012 | US 8744013 B2 | 03 June 2014 |
| | | US 2012320961 A1 | 20 December 2012 |
| | | EP 2522090 A4 | 30 April 2014 |
| | | CN 102687441 B | 22 April 2015 |
| | | EP 2522090 A1 | 14 November 2012 |
| | | JP 2013516798 A | 13 May 2013 |
| | | WO 2011083876 A1 | 14 July 2011 |
| CN 102308542 A | 04 January 2012 | WO 2010091216 A3 | 24 February 2011 |
| | | US 8073393 B2 | 06 December 2011 |
| | | WO 2010091216 A2 | 12 August 2010 |
| | | US 2010197254 A1 | 05 August 2010 |
| | | TW 201110627 A | 16 March 2011 |
| | | EP 2394405 A2 | 14 December 2011 |
| | | KR 20110129881 A | 02 December 2011 |
| | | JP 2012517202 A | 26 July 2012 |
| | | IN 201105587 P4 | 12 October 2012 |
| US 2007206689 A1 | 06 September 2007 | WO 2007103183 A3 | 15 November 2007 |
| | | WO 2007103183 A2 | 13 September 2007 |
| | | TW 200737807 A | 01 October 2007 |

Form PCT/ISA/210 (patent family annex) (July 2009)